(19) **Europäisches Patentamt / European Patent Office / Office européen des brevets**

(11) **EP 3 909 435 A1**

(12) **EUROPÄISCHE PATENTANMELDUNG**

(43) Veröffentlichungstag:
**17.11.2021 Patentblatt 2021/46**

(51) Int Cl.:
*A23K 10/30* (2016.01)    *A23K 10/35* (2016.01)
*A23K 20/142* (2016.01)    *A23K 50/40* (2016.01)

(21) Anmeldenummer: **21172615.3**

(22) Anmeldetag: **06.05.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **06.05.2020 DE 102020205726**

(71) Anmelder: **Younikat GmbH**
**81667 München (DE)**

(72) Erfinder:
• **ZAUNE-FIGLAR, Tessa**
**81667 München (DE)**
• **HENSSEN, Valerie**
**80469 München (DE)**

(74) Vertreter: **Kehl, Ascherl, Liebhoff & Ettmayr**
**Patentanwälte Partnerschaft mbB**
**Emil-Riedel-Straße 18**
**80538 München (DE)**

(54) **TIERFUTTERMITTELZUSAMMENSETZUNG**

(57)    Die vorliegende Erfindung bezieht sich auf eine Tierfuttermittelzusammensetzung. Die erfindungsgemäße Tiermittelzusammensetzung umfasst:

a. 5 bis 60 Gew.-% Protein unter Bezugnahme auf das Trockengewicht der Zusammensetzung, umfassend Protein aus der Familie der Wasserlinsengewächse (Lemnaceae),

b. 0,5 bis 65 Gew.-% Kohlenhydrate unter Bezugnahme auf das Trockengewicht der Zusammensetzung;

c. 0,001 bis 5 Gew.-% Faserstoff unter Bezugnahme auf das Trockengewicht der Zusammensetzung.

Fig. 1

**Beschreibung**

**Technisches Gebiet**

Die Erfindung betrifft eine pflanzliche Tierfuttermittelzusammensetzung gemäß dem Gegenstand von Anspruch 1, ein Herstellungsverfahren gemäß dem Gegenstand von Anspruch 16 sowie eine Verwendung der Tierfuttermittelzusammensetzung gemäß dem Gegenstand von Anspruch 19.

**Hintergrund**

Der Begriff "Tierfuttermittel" bezeichnet generell alle Arten von Tiernahrung. Bei der Einteilung von Tierfuttermitteln anhand ihrer Inhaltsstoffe unterscheidet man beispielsweise zwischen Grünfuttermitteln, eiweißreichen Futtermitteln, ölhaltigen Futtermitteln, Spezialfuttermitteln und Alleinfuttermitteln. Ein Alleinfuttermittel ist gemäß der europäischen Verordnung (EG) Nr. 767/2009 Art. 3 (2)(i) definiert als ein "Mischfuttermittel, das wegen seiner Zusammensetzung für eine tägliche Ration ausreicht". Abhängig von Art, Alter und der Nutzungsrichtung können Tiere mittels eines Alleinfuttermittels mit allen notwendigen Nährstoffen versorgt werden. Alleinfuttermittel sind daher gekennzeichnet durch die genaue Abstimmung aller verwendeten Zutaten und der Bearbeitungsprozesse auf das zu versorgende Tier und somit eine exakte Einhaltung des Nährstoff-, Spurenelemente-, Vitamin- und Mineralstoffbedarfes sowie einer geeigneten Konsistenz. Insbesondere im Zusammenhang mit Futtermitteln im Heimtierbereich ist eine genaue Kenntnis des Bedarfs der entsprechenden Tierspezies erforderlich, um sowohl eine Unter- als auch eine Überversorgung mit Nährstoffen zu vermeiden. Dies ist wichtig vor allem hinsichtlich eiweißhaltiger Alleinfutter, wobei die genaue Kenntnis des Protein- bzw. Aminosäurenbedarfs des Tiers und der Aminosäurenverfügbarkeit des Futtermittels die Formulierung von entsprechend angepassten Rationen erlaubt. Der Proteinbedarf eines Tieres wird dabei definiert als die Mindestaufnahme von Protein, die eine optimale Leistung fördert. Diese Mindestaufnahme gewährleistet dabei insbesondere die Zuführung (von Stickstoff und) von essenziellen Aminosäuren.

Nachteilig werden in den bekannten Tierfuttermittelzusammensetzungen Proteine vorwiegend tierischen Ursprungs verwendet. Dies ist vor allen Dingen nachteilig vor dem Hintergrund des mit der Tierhaltung und der Fleischproduktion verbundenen $CO_2$ Ausstoßes. Ferner stehen angesichts des Trends in der Lebensmittelindustrie, tierische Beiprodukte nicht für die Herstellung von Tiernahrung, sondern vermehrt für die Herstellung von Lebensmittelerzeugnissen für den Menschen zu verwenden, für die Tierfutterherstellung weniger tierische Eiweißquellen zur Verfügung. Beispielsweise wird Hühner-Kollagen für die Herstellung von Wurstwaren (Munashinge 2015) und Schweine-Kollagen zur Qualitätsverbesserung von Räucherschinken (Schilling et al., 2003) verwendet. Beiprodukte aus Garnelen werden als Nahrungsergänzungsmittel eingesetzt (Bueno-Solano et al., 2009). Für die Herstellung von Tiernahrung für Haustiere werden häufig verschiedene Proteinquellen kombiniert, um die allgemeine Qualität und das Aminosäureprofil zu verbessern (Zekic, 2012), wobei insbesondere Geflügel- und Fischmehle zum Einsatz kommen.

Wasserlinsengewächse (Lemnaceae) sind ubiquitär vorkommende, freischwebende Wasserpflanzen, die in einer Vielzahl von Bereichen Einsatz finden: beispielsweise in der Abwasserklärung, der Produktion von biopharmazeutischen Produkten, als Futtermittel-Zusatzstoffe im Bereich der kommerziellen Zucht von Geflügel, Schweinen und Fischen. Die Familie der Lemnaceae umfasst die Unterfamilien Wolffioideae und Lemnoideae, die sich phylogenetisch wiederum in fünf Gattungen unterteilen: die Unterfamilie Wolffioideae umfasst die Gattungen Wolffia and Wolffiella, die Unterfamilie Lemnoideae umfasst die Gattungen Lemna, Landoltia, und Spirodela (Les et al., 2002). Allen Gattungen gemeinsam ist ein hoher Nährwert, wobei der Rohproteingehalt, in Abhängigkeit von den Kulturbedingungen, zwischen 20 % und 45 % des Trockengewichts betragen kann (Appenroth, 2017). Der Proteingehalt lässt sich insbesondere durch einen großen Ammoniumsalzanteil in der Zucht steigern. Im Gegensatz zu Protein aus anderen Pflanzen sind Wasserlinsen im Allgemeinen reich an vielen essentiellen Aminosäuren und können bis zu der doppelten Menge dessen beinhalten, was von der Food and Agriculture Organization (FAO) als Norm für gesunde Ernährung festgeschrieben wurde (bezogen auf Menschen). Inbesondere kommen die essentiellen Aminosäuren Lysin, Threonin, Valin, Leucin und Phenylalanin vor (Appenroth und Augsten 1996). Wasserlinsengewächse sind damit Proteinen tierischen Ursprungs sehr ähnlich. Die verschiedenen Gattungen unterscheiden sich allerdings in ihren anatomischen, biochemischen und genetischen Merkmalen sowie in Bezug auf ihre Wachstumsgeschwindigkeit; selbst die unterschiedlichen Arten innerhalb einer Gattung weisen teilweise erhebliche Unterschiede hinsichtlich Protein-, Stärke- und Fettgehalt und Faseranteil auf (Appenroth, 2018). Die Pflanzen können ökonomisch und Ressourcen-schonend angebaut werden: im Vergleich zu der zur Erzeugung einer definierten Proteinmenge aus Soja benötigten Anbaufläche wird für Wasserlinsen nur ca. 1/10 der Anbaufläche benötigt (Appenroth und Augsten, 1996).

Für die Bestimmung der Wertigkeit eines Proteins stehen verschiedene Methoden zur Verfügung, beispielsweise der Aminosäurenindex (AAI) (auch: Chemical Score, CS), bei dem der Gehalt jeder einzelnen essenziellen Aminosäure im Nahrungsproteinen mit dem Gehalt entsprechen Aminosäure in einem Referenzprotein verglichen wird. Je ähnlicher das Nahrungsprotein dem Referenzprotein ist, desto höher sind Score-Wert und Wertigkeit des Nahrungsproteins. Dabei ist die sogenannte "limitierende Aminosäure" die Aminosäure mit dem niedrigsten Scorewert. Da der AAI nicht die unterschiedliche tatsächliche Verdaulichkeit des jeweiligen Proteins berücksichtigt, wird die Proteinqualität gemäß Empfehlungen der WHO mithilfe des korrigierten Aminosäureindexes, der sogenannten PDCAAS-Methode (PDCAAS = Protein Digestibility Corrected Amino Acid Score) berechnet. Der AAI wird dabei um die wahre Verdaulichkeit (Protein Digestibility, PD) des Nahrungsproteins korrigiert: PDCAAS= AAI* PD. Die neueste Variante des PDCAAS ist der DIAAS (Digestible Indenspensable Amino Acid Score), bei dem nicht die Verdaulichkeit im gesamten Darmtrakt berücksichtigt wird, sondern die ileale Verdaulichkeit. Hier wird für die von der Mikroflora im Dickdarm produzierten Proteine sowie für die bakterielle Fermentation im Dickdarm korrigiert (FAO, 2013).

## Aufgabe, Lösung, Vorteile

In der erfindungsgemäßen Tierfuttermittelzusammensetzung wird vorteilhaft eine pflanzliche Eiweißquelle verwendet, welche hinsichtlich des korrigierten Aminosäureindexes und der Aminosäurenverdaulichkeit einer tierischen Eiweißquelle ähnlich ist bzw. sich nicht von ihr unterscheidet. Durch die Auswahl der weiteren, Nicht-Proteinbestandteile der Zusammensetzung wird insbesondere gewährleistet, dass eine weitgehend vollständige Absorption des Nahrungsmittelproteins gewährleistet und die Menge an Anti- Nährstoffen weitgehend gering ist. Insbesondere erlaubt die erfindungsgemäße Tierfuttermittelzusammensetzung die einfache und kostengünstige Anpassung an den individuellen Ernährungsbedarf von Tieren, wie er beispielsweise aufgrund einer speziellen Rassenzugehörigkeit geben ist. Auch kann die erfindungsgemäße Tierfuttermittelzusammensetzung auf einfache Art und Weise an den unterschiedlichen Ernährungsbedarf z.B. während des Wachstums, während der Schwangerschaft oder im Alter, bzw. bei Vorliegen von Verdauungs-, Resorptions- oder Stoffwechselstörungen angepasst werden.

In einem ersten Aspekt betrifft die Erfindung eine Tierfuttermittelzusammensetzung umfassend 5 bis 60 Gew.-% Protein unter Bezugnahme auf das Trockengewicht der Zusammensetzung, wobei der Proteinanteil Protein aus der Familie der Wasserlinsengewächse (Lemnaceae) umfasst. Die Tierfuttermittelzusammensetzung umfasst weiterhin 0,5 bis 65 Gew.-% Kohlenhydrate unter Bezugnahme auf das Trockengewicht der Zusammensetzung und 0,001 bis 5 Gew.-% Faserstoff unter Bezugnahme auf das Trockengewicht der Zusammensetzung.

Vorteilhaft umfasst die erfindungsgemäße Tierfuttermittelzusammensetzung einen Proteinanteil umfassend Protein aus der Familie der Wasserlinsengewächse (Lemnaceae). Die Lemnaceae sind eine Unterfamilie der Aronstabgewächse (Araceae). Wasserlinsengewächse gehören zu den kleinsten Samenpflanzen der Erde - die kleinste Pflanze (Wolffia arrhiza, Zwergwasserlinse) ist im ausgewachsenen Zustand weniger als 1 mm groß. Wasserlinsen blühen sehr selten und pflanzen sich meist vegetativ durch Sprossen fort, wobei sie unter günstigen Bedingungen innerhalb von zwei Tagen ihre Biomasse verdoppeln können. Lemnaceae leben freischwimmend an oder wenig unterhalb der Wasseroberfläche von stehenden Gewässern. Die Familie der Wasserlinsengewächse enthält eine Tribus (eine zwischen Familie und Gattung angeordnete Kategorie in der biologischen Systematik), nämlich die Tribus Lemneae. Diese unterteilt sich in fünf Gattungen mit ca. 37 Arten: Lemna mit ca. 13 Arten, die weltweit verbreitet sind; Spirodela mit zwei Arten; Landoltia; Wolffia mit ca. 11 weltweit verbreiteten Arten, sowie Wolffiella, deren etwa 10 Arten sich in Amerika und Afrika finden.

Die Angaben Gewichtsprozent, Gew.-%, bezeichnen die Anzahl von Gramm (oder kg) einer Substanz, die in 100 g (oder kg) eines Gemisches enthalten ist. Vorliegend wird auf das Trockengewicht der Zusammensetzung bezogen.

Insbesondere besteht der Proteinanteil der erfindungsgemäßen Tierfuttermittelzusammensetzung aus hochwertigen Pflanzenproteinen. Insbesondere ist der Proteinanteil in Wasserlinsengewächsen hoch und kann, in Abhängigkeit von den Wachstumsbedingungen zwischen 20-45 % des Trockengewichts betragen. Insbesondere ist die Menge der essenziellen Aminosäure Lysin in allen Lemnaceae - Spezies höher als die Mengen in herkömmlichen Mehlen aus Weizen, Mais oder Reis. Die erfindungsgemäße Zusammensetzung kann sowohl als Nassfutter (Wasseranteil zwischen 50-80 %) als auch als Trockenfutter (Wasseranteil zwischen 5-15 %) verwendet werden, wobei die Löslichkeit in Wasser hervorragend ist. Der Anteil an Faserstoffen gewährleistet neben einer guten Kaubarkeit der erfindungsgemäßen Tierfuttermittelzusammensetzung vor allem eine stabile und gesunde Verdaubarkeit der Zusammensetzung. Auch ist die Verarbeitbarkeit der Tierfuttermittelzusammensetzung durch die Anwesenheit des Wasserlinsenproteins besonders günstig hinsichtlich Prozessaufwand und Kosten.

In einer vorteilhaften Weiterbildung der erfindungsgemäßen Zusammensetzung können 1 bis 99 Gew.-% des Proteinanteils der Tierfuttermittelzusammensetzung aus Protein aus Wasserlinsengewächsen bestehen. Vorteilhaft ist eine derartige Zusammensetzung durch einen hochwertigen Proteinanteil gekennzeichnet. Insbesondere bevorzugt können 1 bis 99 Gew.-% des Proteinanteils aus Wasserlinsen-Ribulose-1,5-bisphosphat-carboxylase/-oxygenase (RuBisCO) bestehen. RuBisCO ist ein für die Kohlenstoffdioxid-Fixierung in Pflanzen wichtiges Enzym und die Kohlenstoffdioxid-Aufnahme in allen photosynthetisch aktiven Pflanzen und Bakterien verantwortlich. Durch das Wachstum der Wasserlinsen in Gewässern können Ressourcen ökonomisch und nachhaltig genutzt und landwirtschaftliche Bodenflächen geschont werden.

In einer bevorzugten Ausführungsform können <50 Gew.-% des Proteinanteils des Tierfuttermittels aus Proteinkonzentrat aus Wasserlinsengewächsen bestehen und > 50 Gew.-% des Proteinanteils eine oder mehrere pflanzliche, nicht-Wasserlinsengewächs-Proteinquellen und/oder eine oder mehrere tierische Proteinquellen und/oder Protein aus Ständerpilzspezies (Basidiomycota) und/oder aus in-vitro Fleisch umfassen. Insbesondere wenn der Proteinanteil des Tierfuttermittels, der aus einem Proteinkonzentrat aus Wasserlinsengewächsen besteht, <50 Gew.-% ausmacht, ist das Produkt durch hervorragende Eigenschaften hinsichtlich Konsistenz, Geschmack und Proteinverdaulichkeit gekennzeichnet. Bei Bedarf kann das Tierfuttermittel mit pflanzlichen bzw. tierischen Proteinquellen substituiert werden. Alternativ können Proteine aus Ständerpilzspezies (Basidiomycota) eingesetzt werden, zu denen bis zu 30.000 verschiedene Arten zählen. Zu den weltweit am häufigsten angebauten Pilzen dieser Gruppe gehören die drei Speisepilze Agaricus bisporus, Lentinula edodes und Pleurotus ostreatus. Basidiomycota sind reich an Protein und Kohlenhydraten, haben einen niedrigen Fettgehalt und sind eine gute Quelle für Mineralien. Vorteilhaft können Pilze aus der Gruppe der Basidiomycota infolge ihres ausdifferenzierten Enzymsystems verschiedenste organische Abfälle abbauen und zum Beispiel so komplexe Strukturen wie Lignin nach dem Abbau für ihren Stoffwechsel nutzen. Besondere vorteilhaft ist es, wenn erfindungsgemäßen Ständerpilzspezies durch eine ausgewogene Aminosäurezusammensetzung gekennzeichnet sind und alle essentiellen Aminosäuren enthalten. Es ist weiterhin vorteilhaft, wenn es sich bei dem erfindungsgemäßen Protein Ständerpilzspezies um Myzelien -Protein handelt. Myzelien -Protein können aus kultivierten Myzelzellen gewonnen werden. Beispielsweise können Myzelien unterschiedlicher Pilze in einer kontrollierten Umgebung mit Nebenströmen oder Abfallprodukten aus industriellen und landwirtschaftlichen Prozessen gefüttert werden, wobei zum Beispiel Zuckerrohr, Reishülsen und verbrauchtes Getreide Abfallprodukte solcher Prozesse sein können. In Bioreaktoren fermentieren die Myzelzellen die Nebenströme und vermehren sich, wodurch eine proteinreiche Biomasse entsteht, welche wiederum in verschiedenen Produkten eingesetzt werden kann.

In einer weiteren bevorzugten Ausführungsform können Proteine aus Schimmelpilzen, zum Beispiel Aspergillus flavus var. oryzae, den Proteinanteil in der erfindungsgemäßen Tierfuttermittelzusammensetzung ergänzen.

Bei in-vitro Fleisch, oder auch kultiviertem Fleisch handelt es sich um Fleisch, das durch In-vitro-Zellkultur von tierischen Zellen statt von geschlachteten Tieren hergestellt wird. In-vitro Fleisch gehört damit zur sogenannten "zellulären Landwirtschaft". Kultiviertes Fleisch wird mittels Tissue-Engineering-Techniken hergestellt, die in der herkömmlichen regenerativen Medizin verwendet werden. Vorteilhaft kann Ressourcen-schonend kultiviertes Fleisch echtes Fleisch ersetzen, um natürliche Ressourcen (Landverbrauch, Monokultur etc.) zu schonen.

In einer bevorzugten Weiterbildung der erfindungsgemäßen Tierfuttermittelzusammensetzung können 1 bis 99 Gew.-% des Proteinanteils des Tierfuttermittels aus Protein aus Wasserlinsengewächsen bestehen und zusätzlich Protein aus Ständerpilzspezies (Basidiomycota) oder Schimmelpilzen und/oder in-vitro Fleisch umfassen. Insbesondere wenn der Proteinanteil des Tierfuttermittels, der aus einem Proteinkonzentrat aus Wasserlinsengewächsen besteht durch weitere Proteinquellen mit definiertem Aminosäureprofil ergänzt wird, wie z. B. nach Ergänzung durch Protein aus gezüchteten Pilzprodukten oder aus in-vitro- Fleisch, ist das Produkt durch hervorragende Eigenschaften hinsichtlich Konsistenz, Geschmack und Proteinverdaulichkeit gekennzeichnet.

In einer bevorzugten Implementierung kann die Zusammensetzung eine pflanzliche Tierfuttermittelzusammensetzung sein. Vorteilhaft ist eine Tierfuttermittelzusammensetzung auf pflanzlicher Basis in großer Menge Ressourcenschonend herzustellen.

In einer weiteren Ausführungsform kann die Zusammensetzung einen korrigierten Aminosäurenindex (AAI) von mindestens $\geq 0{,}9$, bevorzugt mindestens $\geq 0{,}95$ aufweisen. Der (unkorrigierte) Aminosäurenindex (oder auch "Chemical Score") wird durch einen Vergleich eines zu bewertenden Proteins (Testprotein) zu einem Referenzprotein berechnet, welches grundsätzlich frei gewählt werden kann. Um einen aussagekräftigen AAI für ein bestimmtes Testprotein zu erhalten, ist es allerdings notwendig, ein Referenzprotein zu wählen, welches dem Bedarf des zu ernährenden Organismus tatsächlich entspricht. Der AAI berechnet sich gemäß

$$AAI = \left( \left\{ ..., \frac{\%Anteil\ AS_{i,T}}{\%Anteil\ AS_{i,R}} * 100, ... \right\} \right).$$

wobei $As_{i,T}$ = Aminosäure$_i$; bzw. Aminosäurengruppe$_i$ im Testprotein T mit $1 \leq i \leq n$, $AS_{i,R}$ = Aminosäure$_i$; bzw. Aminosäurengruppe$_i$ im Referenzprotein R mit $1 \leq i \leq n$, und n = Anzahl der Aminosäuren bzw. Aminosäurengruppe im Referenzprotein.

Zur Bestimmung des korrigierten Aminosäurenindex wird der Aminosäurenindex in Bezug auf die Verdaulichkeit des Proteins korrigiert gemäß

korrigierter Aminosäurenindex = AAI x wahre Verdaulichkeit.

Der korrigierte Aminosäurenindex wird üblicherweise als Protein Digestibility-Corrected Amino Acid Score (PDCAAS) bezeichnet. Die wahre Verdaulichkeit eines aufgenommen Proteins wird anhand des darin enthaltenen Stickstoffs ermittelt, d. h. die Verdaulichkeit bezeichnet das Verhältnis von absorbiertem Stickstoff zu aufgenommenem Stickstoff. Da der absorbierte Stickstoff allerdings nicht direkt gemessen werden kann, wird er aus der Differenz zwischen aufgenommenem und fäkal ausgeschiedenem Stickstoff errechnet, d.h. gemäß

$$wahre\ Verdaulichkeit\ =\ \frac{N_{auf,T} - (N_{f\ddot{a}k,T} - N_{f\ddot{a}k,R})}{N_{auf,T}}$$

wobei $N_{auf,T}$ = aufgenommener Stickstoff des Testproteins, $N_{f\ddot{a}k,T}$ = fäkal ausgeschiedener Stickstoff des Testproteins, $N_{f\ddot{a}k,R}$ = fäkal ausgeschiedener Stickstoff bei einer eiweißfreien Referenzdiät. Bei der Bestimmung der wahren Verdaulichkeit werden die von der Mikroflora im Dickdarm produzierten Proteine, die endogene Proteinsekretion im Magen-Darm-Trakt und bakterielle Fermentation im Dickdarm mitberücksichtigt. Die erfindungsgemäße Zusammensetzung weist vorteilhaft einen korrigierten Aminosäurenindex auf, der im Bereich tierischer Eiweißprodukte liegt, wobei zum Beispiel Hühner-Volleiprotein, Kuhmilch und Casein beispielsweise jeweils einen (trunkierten) korrigierten Aminosäurenindex von 1 aufweisen und die entsprechenden Indices von Hühnchen- oder Rindfleisch bei entsprechend 0,95 und 0,92 liegen. Der korrigierte Aminosäurenindex von Soja oder isoliertem Erbsenproteinkonzentrat liegt demgegenüber bei 0,91 bzw. 0,89. Die erfindungsgemäße Zusammensetzung ist durch vorteilhaft durch einen definierten Proteinanteil von hoher Qualität gekennzeichnet, wobei die diesen Anteil liefernde Pflanzen gleichzeitig unter definierten Wachstumsbedingungen große Mengen an Protein produzieren.

In einer weiteren Ausführungsform kann die scheinbare Proteinverdaulichkeit der Zusammensetzung mindestens ≥ 70%, bevorzugt ≥ 80%, und insbesondere bevorzugt ≥ 85% betragen. Die scheinbare Verdaulichkeit berechnet sich aus:

$$scheinbare\ Verdaulichkeit\ =\ \frac{N_{auf,P} - N_{f\ddot{a}k,P}}{N_{auf,P}}$$

wobei $N_{auf,P}$ = aufgenommener Stickstoff des Proteins, $N_{f\ddot{a}k,P}$ = fäkal ausgeschiedener Stickstoff des Proteins. Die scheinbare Proteinverdaulichkeit von tierischen Produkten, wie beispielsweise von Hühnereiern oder Milch/Käse, liegt entsprechend bei 0,97 bzw. 0,98. Haferflocken, Mais oder Bohnen sind gekennzeichnet durch eine scheinbare Protein Verdaulichkeit von 0,86 bzw. 0,85 bzw. 0,78. Die scheinbare Proteinverdaulichkeit wird auch als "apparent fecal digestibility", aFD bezeichnet. Für kommerziell erhältliche, fleischbasierte Trockenfutter für erwachsene Hunde wird die aFD im Bereich von ca. 80 % geschätzt (Bereich: 71-92%, Hervera, 2001; 78,1-83,9 %, Hendricks 2013). Vorteilhaft liegt die scheinbare Verdaulichkeit der erfindungsgemäßen Zusammensetzung über den Werten für kommerziell erhältliche Trockenfutter auf Fleischbasis.

In einer bevorzugten Weiterbildung kann das Protein aus Wasserlinsengewächsen in der Tierfuttermittelzusammensetzung ausgewählt sein aus einer Gruppe bestehend aus isoliertem Wasserlinsenprotein, Wasserlinsenproteinkonzentrat, Wasserlinsenproteinisolat, Wasserlinsenproteinhydrolysat, rohen, gemahlenen oder zerquetschten Wasserlinsen oder Kombinationen davon. Proteinkonzentrate werden durch Ultrafiltration des nicht erhitzten Ausgangsprodukts gewonnen; der Proteingehalt liegt dabei beispielsweise zwischen 70 bis 80 %. Proteinisolate weisen einen weitaus höheren Proteinanteil von bis zu 95 % auf, da bei der Ultrafiltration mit kleinerer Porengröße gearbeitet wird. Alternativ zur Mikrofiltration steht die Ionenaustauschtechnik zur Verfügung mit annähernd dem gleichen Ausbeutungsgrad an Proteinen, wobei nachteilig eine Reihe von chemischen Substanzen zugesetzt und abschließend wieder entfernt werden müssen. Proteinhydrolysate werden auf der Basis eines Proteinkonzentrats oder -isolats durch chemische oder enzymatische Hydrolyse hergestellt. Proteinhydrolysate gelten durch den Aufschluss in einzelne Aminosäuren als besonders gut verdaulich. Vorteilhaft können die Proteine aus Wasserlinsengewächsen hinsichtlich ihrer Konzentration in der erfindungsgemäßen Tierfuttermittelzusammensetzung durch die Auswahl der entsprechenden Zubereitung dem Bedarf des Tieres angepasst werden (z.B. unterschiedlicher Proteingehalt für alte und junge Tiere, unterschiedliche Proteinaufbereitung in den Fällen von Nahrungsmittelunverträglichkeiten oder Allergien).

In einer bevorzugten Ausführungsform können das Wasserlinsenprotein, das Wasserlinsenproteinkonzentrat, Wasserlinsenproteinisolat, Wasserlinsenproteinhydrolysat, rohen, gemahlenen oder zerquetschten Wasserlinsen oder Kombinationen davon in der erfindungsgemäßen Tierfuttermittelzusammensetzung als entfärbte (gebleichte, farblose) Zutat eingesetzt werden. Die entsprechenden Verfahren zum Bleichen von Nahrungsmitteln, insbesondere von pflanzlichen Nahrungsmitteln, zum Beispiel Kochen mit oder ohne Bleichmittel (zum Beispiel Natriumbicarbonat), oder Behandlung mit Dampf, sind dem Fachmann bekannt. In einer weiteren Ausführungsform können das Wasserlinsenprotein, das Wasserlinsenproteinkonzentrat, Wasserlinsenproteinisolat, Wasserlinsenproteinhydrolysat, rohen, gemahlenen oder zerquetschten Wasserlinsen oder Kombinationen davon in der erfindungsgemäßen Tierfuttermittelzusammensetzung als geruchlose Zutat eingesetzt werden. Der Geruch kann dabei mittels sensorischer Analyse bestimmt werden, beispielsweise mittels statischer oder dynamischer Olfaktometrie (DIN 10950). In besonders bevorzugten Ausführungsformen können die auf Wasserlinsen basierenden Zutaten in der erfindungsgemäßen Tierfuttermittelzusammensetzung hinsichtlich ihrer Sensorik farbig oder entfärbt, geruchslos oder nicht-geruchsneutral vorliegen, oder Kombinationen davon. Vorteilhaft ist der aus Wasserlinsengewächsen stammende Proteinanteil der erfindungsgemäße Tierfuttermittelzusammensetzung farblos und geruchslos, um für den Tierhalter eine entsprechende Sensorik bereitzustellen.

In einer weiteren Implementierung kann das Protein aus Wasserlinsengewächsen der Gattung Lemna, Wolffiella oder Wolffia oder Kombinationen (Kreuzungen) davon stammen. Insbesondere die Gattungen Wolfiella und Wolfia zeichnen sich durch einen hohen Gehalt essentieller Aminosäuren bei gleichzeitig hoher Wachstumsgeschwindigkeit aus (Appenroth 2017).

In einer bevorzugten Ausführungsform kann das Protein aus Wasserlinsengewächsen aus Kreuzungen (beispielsweise mittels klassischer Züchtung oder Gen-Editierung) von Mitgliedern unterschiedlicher Gattungen stammen, zum Beispiel der Kreuzung von Landoltia punctata mit Lemna Minor L, bzw. der Kreuzung zweier unterschiedlicher Spezies von Lemna gibba G3. Der Fachmann ist in der Lage, mittels der Untersuchung von Heterosis (verbesserte Leistungsfähigkeit von Hybriden der ersten Filialgeneration (F1) im Vergleich zur durchschnittlichen Leistung der Parentalgeneration) geeignete Wasserlinsen Kreuzungen vorzunehmen, wobei die Filialgeneration insbesondere durch verbesserte Blüh-Fähigkeit und Samenproduktion gekennzeichnet ist (Beurteilungskriterium). Die dafür erforderlichen Klone sind in der Datenbank der Rutgers DuckweedStock Cooperative, RDSC (http://www.ruduckweed.org/) aufzufinden.

In einer bevorzugten Weiterbildung kann die Tierfuttermittelzusammensetzung zusätzlich 1 bis 10 Gew.-% eines Fettes umfassen. Besonders bevorzugt kann das Fett ausgewählt sein aus der Gruppe der pflanzlichen Öle, wobei die Gruppe der pflanzlichen Öle aus Sonnenblumenöl, Algenöl, Chiasamenöl, Sesamöl, Nachtkerzenöl, Kürbiskernöl, Traubenkernöl, Sanddornöl, Hagebuttenkernöl, Arganöl, Schwarzkümmelöl, Borretschöl, Aprikosenkernöl, Mandelöl, Erdnussöl, Leinöl, Leinsamenschrot, Leindotteröl, Olivenöl, Rapsöl, Maiskeimöl, Haselnussöl, Hanföl, Reiskeimöl, Sesamöl, Distelöl, Sojaöl, Palmöl, Kokosfett, Wallnussöl oder Kombinationen davon besteht. Tierische Fette können erfindungsgemäß aus dem Gewebe von Säugetieren, Geflügel und Fisch wie z. B. Rindertalg, Schweineschmalz, Geflügelfett und Fischöl stammen. In herkömmlichen Heimtierfuttermitteln bilden Fette den Hauptenergielieferant und begünstigen die Absorption fettlöslicher Vitamine. Sie stellen wichtige Vorläufermoleküle im Syntheseweg für Eicosanoide und Prostaglandine bereit und wirken als Geschmacksverbesserer. Insbesondere sind Fette für die Bereitstellung essentieller Fettsäuren notwendig, also Fettsäuren, die eine oder mehrere Doppelbindungen an höheren Positionen als C-9 (vom Carbonyl-Kohlenstoff ausgehend gezählt) besitzen und die der Organismus nicht selber herstellen kann. Die erfindungsgemäße Tierfuttermittelzusammensetzung umfasst vorzugsweise omega-6 and omega-3 Fettsäuren, wie Linolensäure (18:2) und Arachidonsäure (20:4) als omega-6 essentielle Fettsäuren, und alpha-Linolensöure (18:3), Eicosapentaensäure (20:5) und Docosahexaensäure (22:6) als omega-3 Fettsäuren.

In einer weiteren Ausführungsform kann die erfindungsgemäße Tierfuttermittelzusammensetzung zusätzlich 0,01 bis 3 Gew.-% eines Mineralzusatzes umfassen. Der erfindungsgemäße Mineralzusatz umfasst dabei beispielhaft die Vitamine A, D3, E, B1, B2, B6, B12, Biotin, Niacin und Pantothensäure sowie z.B. Kupfer (als Kupferacetat), Calcium, Phosphor, Mangan (als Mangansulfat), Zink (als Zinksulfat), Jod (als Kaliumjodid) sowie Eisen (als Eisenfumarat).

In einer bevorzugten Implementierung kann die erfindungsgemäße Tierfuttermittelzusammensetzung zusätzlich 0,01 bis 2,0 Gew.-% Aminosäuren umfassen. Erfindungsgemäß umfasst die Gruppe der Anminosäuren proteinogene und nicht- proteinogene Aminosäuren, sowie essentielle Nährstoffe, wie z.B. Taurin und Carnitin. Insbesondere bevorzugt können die Aminosäuren aus der Gruppe bestehend aus Cystein, Methionin, Threonin, Tryptophan oder Kombinationen davon ausgewählt sein. Vorteilhaft können einzelne Aminosäuren gezielt supplementiert werden, da beispielsweise die ideale Verdaulichkeit für einige Aminosäuren in Abhängigkeit von anderen Nahrungsbestandteilen und der Zubereitungsart (erhitzen) erheblich variieren kann (Hendriks, 2015). Die ileale Verdaulichkeit von Cystein variiert zum Beispiel von 29-69 % in direkter Abhängigkeit von der bei der Zubereitung der Nahrung verwendeten Hitze (Crosslinking innerhalb von Proteinen; Deb-Choudhury et al., 2014)

In einer bevorzugten Weiterbildung kann die Zusammensetzung weiterhin ein Protein umfassen ausgewählt aus der Gruppe bestehend aus einem Weizenprotein, einem Roggenprotein, einem Gerstenprotein, einem Haferprotein, einem Rapsprotein, einem Lupinenprotein, einem Erbsenprotein, einem Reisprotein, einem Sojaprotein, einem Hirseprotein, einem Amaranthprotein, einem Pfeilwurzprotein, einem Chiaprotein, einem Buchweizenprotein, einem Maniokprotein, einem Kichererbsenprotein, einem Erdnussprotein, einem Kartoffelprotein, einem Sonnenblumenprotein, einem Tapiokaprotein oder Kombinationen davon. Vorteilhaft können zusätzliche Proteine aus den genannten Quellen hinzugefügt werden, um eine optimale Anpassung der Zusammensetzung zu gewährleisten in Abhängigkeit zum Beispiel vom Alter des Tieres, den physiologischen Anforderungen (Wachstum, Schwangerschaft), bestimmten pathologischen Gegebenheiten (Allergie, Nahrungsmittelunverträglichkeit) und/oder von durch die Rassezugehörigkeit bedingten Unterschieden (z. B. Mansilla et al., 2018, Untersuchung unterschiedlicher Hunderassen).

In einer weiteren Ausführungsform können die Kohlenhydrate in der erfindungsgemäßen Tierfuttermittelzusammensetzung ausgewählt sein aus Getreide und/oder Pseudogetreide und/oder Gemüse, und insbesondere ausgewählt sein aus der Gruppe bestehend aus Buchweizenkohlenhydrat, Dinkelkohlenhydrat, Amaranthkohlenhydrat, Quinoakohlenhydrat, Weizenkohlenhydrat, Hirsenkohlenhydrat, Süßkartoffelkohlenhydrat, Maniokkohlenhydrat, Roggenkohlenhydrat, Gerstenkohlenhydrat, Haferkohlenhydrat, Maiskohlenhydrat, Reiskohlenhydrat, Kartoffelkohlenhydrat und Kombinationen davon. Unter einem Pseudogetreide wird dabei ein Getreide aus Körnerfrüchten von Pflanzenarten verstanden, die nicht zur Familie der Süßgräser (= alle echten Getreidearten) gehören, welches aber ähnlich wie ein echtes Getreide verwendet wird. Samen von Pseudogetreiden sind vorteilhaft glutenfrei. Vorteilhaft sind Gemüse wie zum Beispiel schwarze Bohnen, Lima Bohnen, Brokkoli, Blumenkohl etc. reich an schwerverdaulichen Faserstoffen. Vorteilhaft können Kohlenhydrate aus den genannten Quellen in der erfindungsgemäßen Tierfuttermittelzusammensetzung selektiv eingesetzt werden, um eine optimale Anpassung der Zusammensetzung zu gewährleisten in Abhängigkeit zum Beispiel vom Alter des Tieres, den physiologischen Anforderungen (Wachstum, Schwangerschaft), bestimmten pathologischen Gegebenheiten (Übergewicht, Allergie, Nahrungsmittelunverträglichkeit) und/oder von durch die Tier-Rassenzugehörigkeit bedingten Unterschieden.

In einem zweiten Aspekt betrifft die Erfindung ein Verfahren zur Herstellung der Tierfuttermittelzusammensetzung wie vorstehend beschrieben, umfassend die Schritte des Mischens von Protein aus der Familie der Wasserlinsengewächse (Lemnaceae) mit Kohlenhydraten, vorzugsweise mit Getreide- und/oder Kartoffelkohlenhydraten, und mit Faserstoffen, vorzugsweise mit Gemüsefaserstoffen, in flüssiger Phase. In einer bevorzugten Ausführungsform wird das Verfahren ergänzt durch die Schritte: gegebenenfalls Hinzufügen von Aminosäure-optimiertem Protein aus Ständerpilzspezies (Basidiomycota) oder Schimmelpilzspezies, und/oder von in-vitro Fleischgegebenenfalls gefolgt vom Schritt des Erhöhens der Trockensubstanz der flüssigen Phase, gegebenenfalls gefolgt von der Zugabe von Aminosäuren in flüssiger Phase und Erhalt einer flüssigen Zusammensetzung, gegebenenfalls gefolgt von der Zugabe von wasserlöslichen Mineralstoffen unter Erhalt einer ergänzten Zusammensetzung; gegebenenfalls gefolgt von der Zugabe von Fett und dem nachfolgenden Homogenisieren mit der flüssigen oder ergänzten Zusammensetzung; und gegebenenfalls gefolgt durch den Schritt des Trocknens der flüssigen Zusammensetzung oder der ergänzten Zusammensetzung. Die Mischung der Grundsubstanzen Protein, Kohlenhydrate, Faserstoffe erfolgt in flüssiger Phase und erlaubt so grundsätzlich eine einfache Herstellung des Futtermittels mit geringem Flüssigkeitsgehalt (Schritt b)). Ist eine Zugabe von Aminosäuren erforderlich, können diese ebenfalls in flüssiger Phase zugegeben werden, sodass eine gleichmäßige Vermischung mit der Grundsubstanz erfolgen kann. Damit werden Kompatibilitätsprobleme zwischen den Einzelbestandteilen, insbesondere den Aminosäuren und der Mischung aus Schritt a), vermieden.

In einem dritten Aspekt betrifft die Erfindung die Verwendung einer Tierfuttermittelzusammensetzung umfassend 5 bis 60 Gew.-% Protein unter Bezugnahme auf das Trockengewicht der Zusammensetzung, weiterhin umfassend Protein aus der Familie der Wasserlinsengewächse (Lemnaceae), wobei ein korrigierter Aminosäureindex mindestens 0,9 beträgt; weiterhin umfassend 0,5 bis 65 Gew.-% Kohlenhydrate unter Bezugnahme auf das Trockengewicht der Zusammensetzung, und 0,001 bis 5 Gew.-% Faserstoff unter Bezugnahme auf das Trockengewicht der Zusammensetzung, als Alleinfutter für Haustiere. Haustiere sind aber erfindungsgemäß alle Tiere, die keiner landwirtschaftlichen Nutzung unterliegen und nicht zum Nutzen der Nahrungsmittelgewinnung dienen (Nutztiere im Landwirtschaftsbereich, zum Beispiel in der Masthaltung oder Milchhaltung). Zu den erfindungsgemäßen Haustieren können also auch Nutztiere, zum Beispiel Schafe, Ziegen, und dergleichen gehören, wenn sie nicht landwirtschaftlich genutzt werden. Die erfindungsgemäße Tierfuttermittelzusammensetzung ist ferner geeignet Alleinfuttermitteln für in zoologischen Einrichtungen gehaltene wildlebende Tierarten (Zootiere). Zu den Haustieren gehören erfindungsgemäß insbesondere auch Amphibien, Spinnentiere, Insekten, Wirbellose und Fische. In einer bevorzugten Weiterbildung kann die Zusammensetzung eine Eignung als Alleinfutter insbesondere Kleintiere, nämlich für Katzen und Hunde aufweisen. Alleinfutter sind dabei als Futtermittel definiert, welche die Tiere abhängig von ihrer Art, ihrem Alter und der Nutzungsrichtung mit allen notwendigen Nährstoffen versorgen und zu denen daher lediglich noch Wasser angeboten werden muss. Alleinfutter sind gekennzeichnet durch eine genaue Abstimmung aller verwendeten Zutaten und der Bearbeitungsprozesse auf das Tier und somit eine exakte Einhaltung des Nährstoff-, Spurenelemente-, Vitamin- und Mineralstoffbedarfes sowie einer geeigneten Konsistenz.

In einer bevorzugten Ausführungsform kann die Zusammensetzung als Alleinfuttermittel für Haustiere (d.h. inklusive Vögel, Reptilien Spinnen Tiere, Insekten, Amphibien, Wirbellose und Fische) und Tiere wildlebender Arten, die in zoologischen Einrichtungen gehalten werden, insbesondere als Alleinfuttermittel für Heim- und Kleintiere, geeignet sein. Heimtiere sind dabei z. B. Kaninchen und Nagetiere; zu den Kleintieren werden Hunde und Katzen gezählt.

Im Rahmen der vorliegenden Erfindung werden Zutaten bevorzugt in Gew.-% angegeben.

## Kurze Beschreibung der Figuren

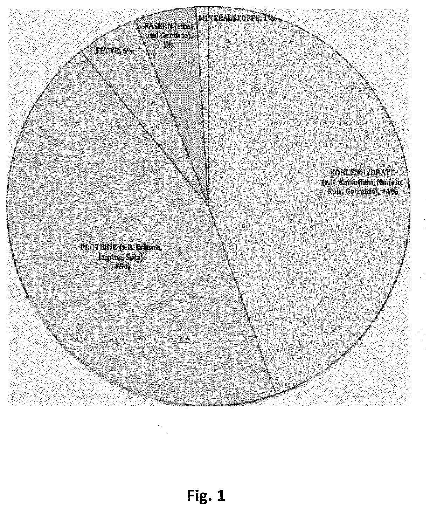

In Fig. 1 ist ein Beispiel für die Zusammensetzung nach Nährstoffgruppen eines vegetarischen Nassfutters für Hunde dargestellt.

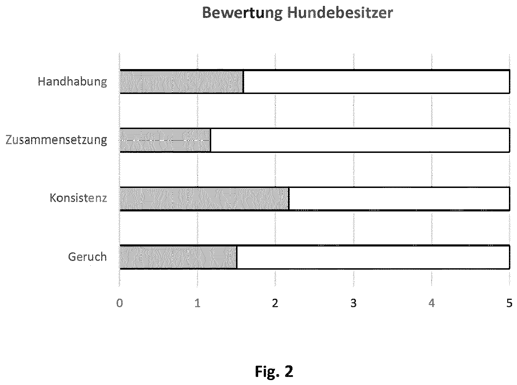

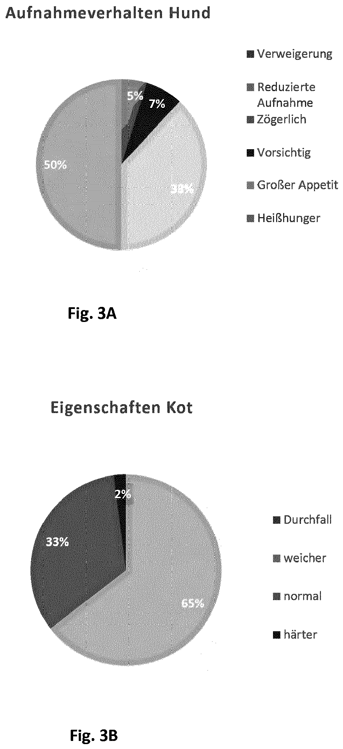

In den Figuren 2 und 3 werden die Ergebnisse eines Fütterungsversuches dargestellt. Fig. 2 zeigt die Bewertung der Sensorik des verfütterten Testfutters durch den Tierhalter auf einer auf einer Skala von 1 = sehr gut bis 5= mangelhaft, wobei Geruch, Konsistenz, Handhabung des Futters, sowie die Beurteilung der Zusammensetzung bewertet wurden.

Fig. 3 A zeigt Beobachtungen zur Futteraufnahme hinsichtlich der Faktoren: Verweigerung des Futters, deutlich reduzierte Aufnahme, zögerliche Aufnahme, vorsichtiger Appetit, Großer Appetit, Heißhunger. In Fig. 3B wird die Verträglichkeit des Futters mittels Beurteilung der Stuhlkonsistenz und der Häufigkeit des Kotabsatzes, erfasst durch den Tierhalter, dargestellt. Erfasste Parameter: "d" - Durchfall, "w" - weichere Konsistenz als unter der üblichen Ernährung, "n" - normale Konsistenz und "h" - härtere Konsistenz als unter der üblichen Ernährung.

## Detaillierte Beschreibung, Beispiele

Die nachfolgend aufgeführten Ausführungsbeispiele dienen lediglich der Illustration und beschränken nicht den Umfang der Erfindung, wie sie in den Ansprüchen dargelegt ist. In den vorstehenden und nachfolgenden Paragrafen bedeutet der Begriff "ein"/ "eine" "ein/eine oder mehrere", sofern nicht anders angegeben.

Die Ausführungsbeispiele betreffen Tierfuttermittelzusammensetzungen für den Haustierbereich, insbesondere für den Kleintierbereich und inbesondere Hundefuttermittel; insbesondere sind die erfindungsgemäßen Tierfuttermittelzusammensetzungen aber auch für andere Säugetiere im Haustierbereich geeignet, zum Beispiel auch für Reptilien, Vögel, Spinnentiere, Insekten, Wirbellose und Fische. Die erfindungsgemäße Tierfuttermittelzusammensetzung ist ferner geeignet für in zoologischen Einrichtungen gehaltene wildlebende Tierarten. Insbesondere betreffen die Ausführungsbeispiele Heimtiere, wie z.B. Kaninchen, Zwergkaninchen, Nager wie zum Beispiel Hamster, Meerschweinchen, Mäuse, und, im speziellen, Kleintiere (Hunde und Katzen).

Die Ausführungsbeispiele beziehen sich sowohl auf Nass- als auch auf Trockenfutter. Ein Beispiel für die Zusammensetzung nach Nährstoffgruppen eines vegetarischen Nassfutters für Hunde ist in Fig. 1 dargestellt.

## Ausführungsbeispiel I: vegetarisches Nassfutter für Hunde

Das Ausführungsbeispiel zeigt eine Zusammenfassung der Zutaten für ein vegetarisches Nassfutter, welches für ausgewachsene Hunde geeignet ist.

| Zutaten: | % |
|---|---|
| Wasserlinsenprotein | 2,50 |
| Volleipulver | 2,50 |
| Haferflocken | 31,00 |
| Linsen | 50,00 |
| Sonnenblumenöl | 4,00 |
| Algen | 1,00 |
| Spinat | 5,00 |
| Mineralmischung | 3,00 |
| Sonnenblumenkerne gemahlen | 1,00 |

Die Zusammensetzung kann beispielhaft umfassen: Gemüse (14 % Kartoffeln, 3 % Möhren, 3 % Zucchini, 3 % Lupinen, 3 % Erbsen, 1,5 % Linsen), pflanzliches Eiweiß (5 % Wasserlinsenproteinpulver), Getreide (3,5 % Hirse), Saaten (1,5 % Sonnenblumenkerne, 0,5 % Chia-Samen), Mineralstoffe (2 % Premix), Öle und Fette (1,4 % Sonnenblumenöl), Algen (0,6 % Schizochytrium), Hefen (0,6 % Bierhefe), pflanzliche Nebenerzeugnisse (0,3 % Kräuter, 0,1 % Ginkgo, 0,1 % Brennnessel).

## Ausführungsbeispiel II: veganes Nassfutter für Hunde

Das Ausführungsbeispiel zeigt eine Zusammenstellung der feuchten (Wasser-haltigen) Zutaten für ein veganes Nassfutter, welches für ausgewachsene Hunde mit speziellem Ernährungsbedarf (Nahrungsmittelunverträglichkeit, Allergie) geeignet ist. Ein Teil des Erbsenproteins kann durch Protein aus Ständerpilzspecies ersetzt sein.

| Zutaten: | % |
|---|---|
| Wasserlinsenprotein | 5,00 |
| Haferflocken | 31,00 |
| Erbsen | 50,00 |
| Sonnenblumenöl | 4,00 |
| Mineralmischung | 3,00 |
| Grünkohl | 5,00 |
| Sonnenblumenkerne gemahlen | 1,00 |
| Algen | 1,00 |

**Ausführungsbeispiel III: fleischhaltiges Nassfutter für Hunde**

Das Ausführungsbeispiel zeigt eine Zusammenstellung der feuchten (Wasser-haltigen) Zutaten für ein fleischhaltiges Nassfutter, welches für ausgewachsene Hunde geeignet ist. Ein Teil des Fleisches kann durch in-vitro-Fleisch ersetzt sein.

| Zutaten: | % |
|---|---|
| Rindfleisch | 50,00 |
| Reis | 10,00 |
| Zucchini | 8,00 |
| Wasserlinsenprotein | 13,00 |
| Grünkohl | 7,00 |
| Äpfel | 7,00 |
| Rapsöl | 2,00 |
| Seealgen | 1,00 |
| Mineralmischung | 2,00 |

**Ausführungsbeispiel IV: vegetarisches Trockenfutter für Hunde**

Das Ausführungsbeispiel zeigt eine Zusammenstellung der Zutaten für ein vegetarisches Trockenfutter, welches für ausgewachsene Hunde geeignet ist.

| Zutaten: | % |
|---|---|
| Linsen | 19,10 |
| Erbsen | 28,80 |
| Süßkartoffeln | 16,90 |
| Wasserlinsenprotein | 9,80 |
| Volleipulver | 10,00 |
| Johannisbrot | 3,00 |
| Rapsöl | 2,80- |
| Sonnenblumenöl | 2,50 |
| Leinsaat | 2,00 |
| Mineralmischung | 2,40 |

(fortgesetzt)

| Zutaten: | % |
|---|---|
| Bierhefeextrakt, hydrolysiert | 1,00 |
| Karotte | 1,00 |
| Bierhefe | 0,50 |
| Blaubeeren | 0,10 |
| Kürbis | 0,10 |

**Ausführungsbeispiel V: veganes Trockenfutter für Hunde**

Das Ausführungsbeispiel zeigt eine Zusammenstellung der Zutaten für ein veganes Trockenfutter, welches für ausgewachsene Hunde geeignet ist.

| Zutaten: | % |
|---|---|
| Linsen | 29,10 |
| Erbsen | 28,80 |
| Süßkartoffeln | 16,90 |
| Wasserlinsenprotein | 9,80 |
| Johannisbrot | 3,00 |
| Rapsöl | 2,80- |
| Sonnenblumenöl | 2,50 |
| Leinsaat | 2,00 |
| Mineralmischung | 2,40 |
| Bierhefeextrakt, hydrolysiert | 1,00 |
| Karotte | 1,00 |
| Bierhefe | 0,50 |
| Blaubeeren | 0,10 |
| Kürbis | 0,10 |

**Ausführungsbeispiel VI: fleischhaltiges Trockenfutter für Hunde**

Das Ausführungsbeispiel zeigt eine Zusammenstellung der Zutaten für ein fleischhaltiges Trockenfutter, welches für ausgewachsene Hunde geeignet ist.

| Zutaten: | % |
|---|---|
| Kartoffelflocken | 48,00 |
| Hühnerfleisch getrocknet | 15,00 |
| Kartoffelprotein | 15,00 |
| Wasserlinsenprotein | 10,00 |
| Sonnenblumenöl | 2,50 |
| Rübenmelasseschnitzel | 2,50 |
| Leberhydrolysat | 2,00 |
| Apfeltrester | 2,00 |

(fortgesetzt)

| Zutaten: | % |
|---|---|
| Rapsöl | 2,00 |
| Hefe | 1,00 |

**Ausführungsbeispiel VII**

Das Ausführungsbeispiel zeigt eine lebensmittelanalytische Untersuchung 3 unterschiedlicher vegetarischer Nassfutter mit jeweils einem Protein Supplement aus unterschiedlichen Quellen (Erbsenprotein, Linsenprotein, Wasserlinsenprotein), wobei das Futter als Alleinfuttermittel für ausgewachsene Hunde geeignet ist.

Verschiedene Futtermittel wurden mittels des erfindungsgemäßen Verfahrens hergestellt, Futtermittel 1 wurde mit Erbsenkonzentrat (Isolat) supplementiert (5 Gew. %), Futtermittel 2 mit gekochten Linsen, Futtermittel 3 mit Wasserlinsenproteinkonzentrat (5 Gew. %). Rohnährstoff Analytik zur Ermittlung der Fraktionen Rohprotein, Rohfett, Rohasche, Rohfaser und NFe. Bestimmung des Mineralanteils und der Vitamine mittels Atomspektroskopie oder chemischer Titrationsmethoden. Aminosäurenanalyse wurde durchgeführt mittels HPLC/NIRS/IC.

Für die ermittelten Bedarfe von Hund und Katze wurden folgende Grundannahmen gemacht: Hund: 20 kg, Katze: 4 kg.

| | Einheit | Gehalte pro 100 g | | | Bedarf pro Tag | | Bedarf zur Deckung limitierender AS in g | | | |
|---|---|---|---|---|---|---|---|---|---|---|
| | | Ebsenprotein | Linsen | Lemna minor-Proteinisolat | Hund 20kg | Katze 4kg | Erbsenprotein Hund | Linsen Hund | Lemna minor-Protinisolat Hund | Lemna minor-Proteinisolat Katze |
| Wasser | % | 9 | 12 | 4 | | | | | | |
| Aahproteln | % | 55 | 23 | 45 | | | | | | |
| Rohfett | % | 3 | 1 | 6 | | | | | | |
| Rohasche | % | 6 | 2 | 6 | | | | | | |
| Rohfaser | % | 2 | 39 | | | | | | | |
| Nfe | % | 25 | 58 | | | | | | | |
| | | | | | | | | | | |
| Kalzium | mg | 90 | 70 | | 1230 | | | | | |
| Phosphor | mg | 840 | 340 | | 923 | | | | | |
| Natrium | mg | 900 | 4 | | 246 | | | | | |
| Magnesium | mg | 220 | 110 | | 185 | | | | | |
| Kalium | mg | 1960 | 800 | | 1230 | | | | | |
| | mg | | | | | | | | | |
| Mangan | mg | 2,5 | 1,4 | | 1,5 | | | | | |
| Kupfer | mg | 1,5 | 1,2 | | 1,8 | | | | | |
| Zink | mg | 5,9 | 1 | | 18,5 | | | | | |
| Jod | μg | - | 10 | | 271 | | | | | |
| Eisen | mg | 85 | 9,3 | | 9,2 | | | | | |
| Chlorid | mg | - | - | 0 | 369 | | | | | |
| | | | | | | | | | | |
| Vit A | IE | - | - | | 1554 | | | | | |
| Vit D | IE | - | - | 0 | 167 | | | | | |

EP 3 909 435 A1

(fortgesetzt)

| | Einheit | Gehalte pro 100 g | | | Bedarf pro Tag | | Bedarf zur Deckung limitierender AS in g | | | |
|---|---|---|---|---|---|---|---|---|---|---|
| | | Ebsenprotein | Linsen | Lemna minor-Proteinisolat | Hund 20kg | Katze 4kg | Erbsenprotein Hund | Linsen Hund | Lemna minor-Protinisolat Hund | Lemna minor-Proteinisolat Katze |
| vit E | mg | - | 3 | 0 | 9 | | | | | 1 |
| B1 | mit | - | 0,42 | | 0,69 | | | | | |
| B2 | mg | - | 0,26 | | 1,6 | | | | | |
| B6 | mg | - | 0,2 | | 0,46 | | | | | |
| B12 | μg | - | - | 0 | 11 | | | | | |
| Biotin | μg | - | 10 | | 2 | | | | | |
| Niacin | mg | | 2 | | 5 | | | | | |
| | mg | - | 2 | | | | | | | |
| Panthothensäu | | - | | | 4,61 | | | | | |
| Arginin | g | 3,14 | 0,615 | 4,8 | 1,04 | 0,5 | 33,12 | 169,11 | 21,67 | 10,42 |
| Histidin | g | 1,84 | 0,187 | 1,5 | 0,59 | 0,16 | 32,07 | 315,51 | 3933 | 10,67 |
| Isoleucin | g | 3,92 | 0,35 | 3,7 | 1,13 | 0,28 | 28,83 | 322,86 | 30,54 | 7,57 |
| Meth+Cystein | g | 0,92 | 0,132 | 2,5 | 2 | 0,21 | **217,39** | **1515,15** | 80,00 | 8,40 |
| Leucin | g | 6,52 | 0,561 | 7,3 | 2,08 | 0,6 | 31,90 | 370,77 | 28,49 | 8,22 |
| Lysin | g | 5,02 | 0,545 | 5 | 1,04 | 0,24 | 20,72 | 190,83 | 20,80 | 4.20 |
| Phen/Tyr | g | 6,92 | 0,639 | 7,5 | 2,3 | 1 | 33,24 | 359,94 | 30,67 | 13,33 |
| Threonin | g | 2,46 | 0,311 | 4 | 13 | 0,3 | 52,85 | 418,01 | 32,50 | 7,50 |
| Tryptophan | g | 0,78 | 0,07 | 0,36 | 0,4 | 0 | 51,28 | 571,43 | 111,11 | 22,22 |
| Valin | g | 4,06 | 0,421 | 4,6 | 1,5 | 0,3 | 36,95 | 356,29 | 32,61 | 6,52 |

**Bestimmung der Proteinqualität**

Die Proteinqualität der Tierfuttermittelzusammensetzung kann mittels verschiedener, bekannter Verfahren der Lebensmittelanalytik bestimmt werden (z.B. Lebensmittelanalytik, 2013, Matissek Hrsg).

Zur Vorbereitung wird das zu untersuchende Futter bei Bedarf getrocknet und in einer mit einem 1 Millimeter-Sieb ausgestatteten Labormühle gemahlen. Die Trockensubstanz kann gravimetrisch, mittels Refraktometrie oder mittels Pyknometrie bestimmt werden. Bei der gravimetrischen Bestimmung der Trockensubstanz wird das zu bestimmte Lebensmittel einem Laborofen mit den Trocknungsparametern 105 °C, 8 Stunden (AOAC, 2008) getrocknet. Die Rohproteinbestimmung erfolgt anschließend nach einer dem Fachmann bekannten Methode, beispielsweise nach Kjeldahl oder Dumas, wobei der mit der Methode analytisch bestimmte Stickstoffgehalt über einen entsprechenden, von der Proteinzusammensetzung der Probe abhängigen Korrekturfaktor (im Durchschnittsfall 6,25) in den Proteingehalt der Probe umgerechnet wird.

Einzelne Aminosäuren und ihre prozentuale Verteilung in einer Zusammensetzung können beispielsweise mittels klassischer Aminosäurenanalyse über Ionenaustauschflüssigkeitschromatorgaphie oder über Hochleistungsflüssigkeitschromatographie (HPLC) identifiziert und bestimmt werden.

Zur Bestimmung der Qualität eines gegebenen Proteins oder einer Mischung ist die Kenntnis der Konzentration der im Nahrungsprotein in geringster Konzentration vorliegenden Aminosäure (= limitierende Aminosäure) erforderlich. Mit Hilfe des Aminosäurenindex (AAI) kann die Qualität eines Proteins abgeschätzt werden gemäß

$$AAI = (\left\{ ..., \frac{\%Anteil\ AS_{i,T}}{\%Anteil\ AS_{i,R}} * 100, ... \right\})$$

wobei $As_{i,T}$ = Aminosäure$_i$; bzw. Aminosäurengruppe$_i$ im Testprotein T mit $1 \leq i \leq n$, $AS_{i,R}$ = Aminosäure$_i$; bzw. Aminosäurengruppe$_i$ im Referenzprotein R mit $1 \leq i \leq n$, und n = Anzahl der Aminosäuren bzw. Aminosäurengruppe im Referenzprotein ist.

Mittels des Index der essentiellen Aminosäuren (EAAI) wird der Beitrag der essenziellen Aminosäuren insgesamt zur Bestimmung der Proteinqualität eines Namens Proteins oder eines Gemisches bestimmt gemäß:

$$EAAI = 10^{\log EAA}$$

wobei: $\log EAA = 0,1\ [\log(a_{1T}/a_{1R} * 100) + \log(a_{2T}/a_{2R} * 100) + \log(a_{nT}/a_{nR} * 100)]$ ist mit $a_{1T}....a_{nT}$ Aminosäuren im Testprotein und mit $a_{1R}....a_{nR}$ Aminosäuren im Referenzprotein, Oser (1959).

Der Gesamtgehalt an essentiellen Aminosäuren (E/G) wird bestimmt aus dem Quotienten der Stickstoffmenge aus den essentiellen Aminosäuren in der Proteinquelle und der Menge des Gesamtstickstoffs in der Proteinquelle.

Während die vorgenannten Methoden Aussagen über die Proteinqualität eines Testproteins im Vergleich zu einem Referenzprotein aussagen, kann mittels der nachfolgend beschriebenen Verfahren die Proteinqualität im Organismus beurteilt werden.

Das Proteinwirkungsverhältnis (protein efficiency ratio, PER) repräsentiert den Quotienten aus dem unter Zuführung eines Testproteins erzielten Körpergewichtszuwachs und der Menge an konsumiertem Protein (g). Zur Berechnung des PER erhalten Jungtiere eine standardisierte Nahrungszusammensetzung, wobei 10 Gew. % der Zusammensetzung aus Testprotein bestehen. Über einen bestimmten Zeitraum wird der Gewichtszuwachs bestimmt und mit der konsumierten Proteinmenge verglichen. Beispielsweise ist der PER für das Michprotein Casein 2,5, d.h. pro 1 g konsumierten Casein nimmt eine Jungratte 2,5g an Körpergewicht zu.

Die Biologische Wertigkeit (BW) von Proteinen gibt an, wieviel des absorbierten Stickstoffs im Körper zur Aufrechterhaltung und dem Wachstum von Muskelmasse verwendet wird. Insbesondere bestimmt sich die biologische Wertigkeit aus

$$Biologische\ Wertigkeit = \frac{N_{auf,T} - (N_{fäk,T} - N_{fäk,R}) - (N_{uri,T} - N_{uri,R})}{N_{auf,T} - (N_{fäk,T} - N_{fäk,R})} * 100$$

mit $N_{auf,T}$ = aufgenommener Stickstoff vom Test-Nahrungseiweiß, $N_{fäk,T}$ = fäkal ausgeschiedener Stickstoff vom Test-Nahrungseiweiß, $N_{fäk,R}$ = fäkal ausgeschiedener Stickstoff der eiweißfreien Referenz-Diät, $N_{uri,T}$ = mit dem Urin ausgeschiedener Stickstoff vom Test-Nahrungseiweiß, $N_{uri,R}$ = mit dem Urin ausgeschiedener Stickstoff der eiweißfreien Referenz-Diät. Zur Bestimmung werden die Testsubjekte durch eine proteinfreie Diät auf das absolute Stickstoff-Minimum eingestellt, anschließend wird das zu untersuchende Protein zugegeben und die Stickstoffbilanz ermittelt. Die Biologische Wertigkeit von Molkenprotein liegt z. B. bei 104, die von Hühner-Volleiprotein bei 100. Kuhmilch weist eine BW von 91, Casein eine BW von 77 auf. Sojaprotein hat eine BW von 61.

Die Netto-Proteinverwertung (net protein utilization) gibt an, wie viel des <u>aufgenommenen</u> Stickstoffs im Organismus retiniert und zum Erhalt und Aufbau von Muskelmasse verwendet wird.

$$Netto - Proteinverwertung = \frac{N_{auf,T} - (N_{f\ddot{a}k,T} - N_{f\ddot{a}k,R}) - (N_{uri,T} - N_{uri,R})}{N_{auf,T}} * 100$$

Es wird die retinierte Stickstoffmenge mit der gesamten, im Nahrungseiweiß enthaltenen Stickstoffmenge ins Verhältnis gestellt. Zur Bestimmung der Netto-Proteinverwertung wird häufig auf die Analyse von Tierkadavern zurückgegriffen

Der oben bereits erwähnte korrigierte Aminosäurenindex wird üblicherweise als Protein Digestibility-Corrected Amino Acid Score (PDCAAS) bezeichnet. Die wahre Verdaulichkeit eines aufgenommen Proteins wird anhand des enthaltenen Stickstoffs ermittelt, d. h. die Verdaulichkeit bezeichnet das Verhältnis von absorbiertem Stickstoff zu aufgenommenem Stickstoff. Da der absorbierte Stickstoff allerdings nicht direkt gemessen werden kann, wird er aus der Differenz zwischen aufgenommenem und fäkal ausgeschiedenem Stickstoff errechnet, d.h. gemäß

$$wahre\ Verdaulichkeit = \frac{N_{auf,T} - (N_{f\ddot{a}k,T} - N_{f\ddot{a}k,R})}{N_{auf,T}}$$

wobei $N_{auf,T}$ = aufgenommener Stickstoff des Testproteins, $N_{f\ddot{a}k,T}$ = fäkal ausgeschiedener Stickstoff des Testproteins, $N_{f\ddot{a}k,R}$ = fäkal ausgeschiedener Stickstoff bei einer eiweißfreien Referenzdiät. Bei der Bestimmung der wahren Verdaulichkeit werden die von der Mikroflora im Dickdarm produzierten Proteine, die endogene Proteinsekretion im Magen-Darm-Trakt und bakterielle Fermentation im Dickdarm berücksichtigt (erfassbar durch die Referenzdiät). PDCAAS Werte liegen zwischen 0 und 1, wobei der obere Wert bei 1 trunkiert wird. Die PDCAAS Werte für Kuhmilch, Hühnereiweiß, Molkenprotein und isoliertes Sojaprotein liegen beispielsweise bei 1, für Rindfleisch, Sojamehl und Erbsenproteinkonzentrat (Isolat) zwischen 0,92 und 0,89, für Erbsen bei 0,6, für Erdnüsse und Reis zwischen 0,52 und 0,5.

Noch genauer ist die Bestimmung des korrigierten Aminosäurenindexes essenzieller Aminosäuren (Digestible Indispensable Amino Acid Score, DIAAS)

Die Berechnung des DIAAS erfolgt mittels

$$DIAAI = (\left\{ ..., \frac{\%\ Anteil\ AS_{i,T} * WIV_{i,T}}{\%\ Anteil\ AS_{i,R}} * 100, ... \right\})$$

wobei $As_{i,T}$ = essenzielle Aminosäure$_i$; im Test-Nahrungsprotein mit $1 \leq i \leq n$, $AS_{i,R}$ = essenzielle Aminosäure$_i$; bzw. Aminosäuregruppe$_i$ im Referenzprotein mit $1 \leq i \leq n$, $WIV_{i,T}$ = wahre ileale Verdaulichkeit$_i$ der Aminosäure$_i$ im Test-Nahrungsprotein mit $1 \leq i \leq n$; n = Anzahl der Aminosäuren bzw. Aminosäurengruppen im Referenzprotein

Im Unterschied zum korrigierten Aminosäureindex werden beim DIAAS die essenziellen Aminosäuren miteinander ins Verhältnis gesetzt und außerdem die wahre ileale Verdaulichkeit mitberücksichtigt. Die ileale Verdaulichkeit bezeichnet dabei die im terminalen Ileum ermittelte Verdaulichkeit der entsprechenden Aminosäure unter Berücksichtigung der im Dünndarm erfolgenden endogenen Sekretion von Aminosäuren (zum Beispiel über eine Sonde). Wie auch bei der Berechnung des Aminosäureindex und des korrigierten Aminosäureindex (PDCAAS) ist auch beim DIAAS nur das kleinste Ergebnis, also das der limitierenden Aminosäure bzw. Aminosäurengruppe, ausschlaggebend für die Bewertung des Proteins.

**Bestimmung der Aminosäurenbioverfügbarkeit**

Von der Verdaulichkeit, welche Aussagen darüber treffen lässt, welcher prozentuale Anteil einer aufgenommenen Distanz im Darmtrakt absorbiert wird, unterscheidet sich die Bioverfügbarkeit für Aminosäuren. Diese gibt den Anteil des aufgenommenen Nahrungsmittels an, welches in einer für den Metabolismus oder die Proteinbiosynthese geeigneten, chemischen Form vorliegt. Die Aminosäurenbioverfügbarkeit kann nicht direkt gemessen werden; die Aminosäurenverdaulichkeit wird als Schätzwert für die Aminosäurenbioverfügbarkeit angegeben (Stein et al., 2009). Insbesondere hinsichtlich der Aminosäuren Lysin, Methionin und Cystein wird die Bioverfügbarkeit häufig überschätzt, da diese in einer Form vorliegen können, die eine vollständige Verwertung im Metabolismus ausschließt (chemische Veränderung durch Einwirkung von Hitze und Oxidation während des Herstellungsprozesses; Hendricks, 2017)

**Bestimmung der Schmackhaftigkeit:** relativer Akzeptanztest

Ein relativer Akzeptanztest (RAT) testet die Annahme eines Futters relativ seinem Vergleichsfutter. Der Test basiert auf einer definierten Gruppe von Hunden (n= X); wobei kleine, mittelgroße und große Hunde zur Gruppe gehören. Fütterungszeiten: zweimal am Tag, die Futter wurden parallel über 3 bis 14 Tage gefüttert. Futtermenge für kleine Hunde: 150 g/d, mittelgroße Hunde: 300 g/d, große Hunde: 450g/d.

Schmackhaftigkeit wurde bestimmt anhand von mindestens 3 -5 Kenngrößen, z.Bgefressene Menge (g): Mittelwert der angebotenen Menge des Produktes, die bei einer Einzelmahlzeit gefressen wurde. Verweigerungen: Anzahl der Mahlzeiten in Prozent, wobei keines der angebotenen Futter gefressen wurde. Subjektives Gefallen: mittlere Bewertung auf einer Skala von 1-5 der Wahrnehmung des Besitzers sich der Präferenz des Tieres für die Mahlzeit.

**Fütterungsversuche**

In einem einfachen Fütterungsversuch (angelehnt an den oben beschriebenen relativen Akzeptanztest) können Geschmack und Verdaulichkeit bestimmt werden. N= 6 Hunde (Alter: 1-8 Jahre; n=3 weiblich, n= 3 männlich; unterschiedliche Rassen, alle gefüttert mit einem vegetarischen Trockenfutter) wurden über 8 bis 14 Tage dreimal täglich mit einem veganen Nassfutter enthaltend Wasserlinsenprotein gefüttert. Untersucht wurde die Sensorik des Testfutters In Bezug auf den Hundehalter erfragt wurde eine Bewertung von Geruch, Konsistenz, Handhabung des Futters, sowie die Beurteilung der Zusammensetzung auf einer Skala von 1 = sehr gut bis 5= mangelhaft. Ergebnisse dargestellt in Fig. 2: für alle erfragten Parameter wurde eine gute bis sehr gute Bewertung abgegeben.

In Bezug auf das gefütterte Tier wurde die Futteraufnahme an mindestens 8 folgenden Tagen beobachtet. Folgende Faktoren wurden beurteilt: Verweigerung des Futters, deutlich reduzierte Aufnahme, zögerliche Aufnahme, vorsichtiger Appetit, Großer Appetit, Heißhunger. Ergebnisse dargestellt in Fig. 3A: in >80 % der Fütterungen wurde das Futter mit "großem Appetit" oder "Heißhunger" aufgenommen. Verweigerungen und deutlich reduzierte Aufnahme wurden nicht beobachtet. Besonderheiten nach der Futteraufnahme wurden ebenfalls erfragt, z.B. Würgen, Aufstoßen, Bauchschmerzen, Schlecken, Unwohlsein, Schmatzen. Keine der Besonderheiten wurden beobachtet; subjektiv konnte ein verbesserter Appetit vor allem bei den beiden älteren untersuchten Hunden (≥8 Jahre) festgestellt werden.

Die Verträglichkeit des Futters wurde mittels Beurteilung der Stuhlkonsistenz und der Häufigkeit des Kotabsatzes erfasst. Die Stuhlkonsistenz wurde mit "d" - Durchfall, "w" - weichere Konsistenz als unter der üblichen Ernährung, "n" - normale Konsistenz und "h" - härtere Konsistenz als unter der üblichen Ernährung erfasst. Ebenfalls erfasst wurden Besonderheiten wie zum Beispiel Blut- bzw. Schleimbeimengungen. Ergebnisse dargestellt in Fig. 3B: in über 90 % der Fälle wurde eine normale bis weichere Konsistenz des Stuhls angegeben. Durchfälle und sonstige Besonderheiten wurden nicht beobachtet. In allen Versuchen wurde eine leicht erhöhte Stuhlfrequenz beobachtet.

Vorstehend wurden Beispiele und Ausführungsformen der vorliegenden Erfindung beschrieben. Natürlich ist es nicht möglich, alle möglichen Kombinationen von Komponenten oder Methoden zur Veranschaulichung der vorliegenden Erfindung zu beschreiben, es liegt aber im Bereich fachmännischen Könnens, zusätzliche Kombinationen gemäß der vorliegenden Erfindung vorzunehmen. Dementsprechend umfasst die vorliegende Erfindung alle derartigen Alternativen, Modifikationen und Variationen, die in den Anwendungsbereich der beigefügten Ansprüche fallen.

**Patentansprüche**

1. Tierfuttermittelzusammensetzung umfassend

   a. 5 bis 60 Gew.-% Protein unter Bezugnahme auf das Trockengewicht der Zusammensetzung, umfassend Protein aus der Familie der Wasserlinsengewächse (Lemnaceae),
   b. 0,5 bis 65 Gew.-% Kohlenhydrate unter Bezugnahme auf das Trockengewicht der Zusammensetzung;
   c. 0,001 bis 5 Gew.-% Faserstoff unter Bezugnahme auf das Trockengewicht der Zusammensetzung.

2. Tierfuttermittelzusammensetzung gemäß Anspruch 1, wobei <50 Gew.-% des Proteinanteils des Tierfuttermittels aus Proteinkonzentrat aus Wasserlinsengewächsen besteht und > 50 Gew.-% des Proteinanteils eine oder mehrere pflanzliche, nicht-Wasserlinsengewächs-Proteinquellen und/oder eine oder mehrere tierische Proteinquellen und/oder Protein aus Pilzen, insbesondere aus Ständerpilzspezies (Basidiomycota) oder Schimmelpilzen, und/oder aus in-vitro Fleisch umfasst.

3. Tierfuttermittelzusammensetzung gemäß Anspruch 1, wobei 1 bis 99 Gew.-% des Proteinanteils des Tierfuttermittels aus Protein aus Wasserlinsengewächsen besteht und zusätzlich Aminosäure-optimiertes Protein aus Ständerpilzspezies (Basidiomycota) oder Schimmelpilzen und/oder in-vitro Fleisch umfasst.

4. Tierfuttermittelzusammensetzung gemäß einem der Ansprüche 1 bis 3, wobei die Zusammensetzung eine pflanzliche Tierfuttermittelzusammensetzung ist.

5. Tierfuttermittelzusammensetzung gemäß einem der vorhergehenden Ansprüche, wobei ein korrigierter Aminosäurenindex der Zusammensetzung mindestens ≥0,9, bevorzugt mindestens ≥0,95 ist.

6. Tierfuttermittelzusammensetzung gemäß einem der vorhergehenden Ansprüche, wobei die scheinbare Proteinverdaulichkeit der Zusammensetzung mindestens ≥ 70%, bevorzugt ≥ 80%, und insbesondere bevorzugt ≥ 85% ist.

7. Tierfuttermittelzusammensetzung gemäß Anspruch 2, wobei das Protein aus Wasserlinsengewächsen ausgewählt ist aus einer Gruppe bestehend aus isoliertem Wasserlinsenprotein, Wasserlinsenproteinkonzentrat, gemahlenen Wasserlinsen oder Kombinationen davon.

8. Tierfuttermittelzusammensetzung gemäß einem der vorhergehenden Ansprüche, wobei Protein aus Wasserlinsengewächsen der Gattung Lemna, Wolffiella oder Wolffia oder Kombinationen davon stammt.

9. Tierfuttermittelzusammensetzung gemäß einem der vorhergehenden Ansprüche, zusätzlich umfassend 1 bis 10 Gew.-% eines Fettes.

10. Tierfuttermittelzusammensetzung gemäß Anspruch 9, wobei das Fett ausgewählt ist aus der Gruppe der pflanzlichen Öle, wobei die Gruppe der pflanzlichen Öle aus Sonnenblumenöl, Algenöl, Chiasamenöl, Sesamöl, Nachtkerzenöl, Kürbiskernöl, Traubenkernöl, Sanddornöl, Hagebuttenkernöl, Arganöl, Schwarzkümmelöl, Borretschöl, Aprikosenkernöl, Mandelöl, Erdnussöl, Leinöl, Leinsamenschrot, Leindotteröl, Olivenöl, Rapsöl, Maiskeimöl, Haselnussöl, Hanföl, Reiskeimöl, Sesamöl, Distelöl, Sojaöl, Palmöl, Kokosfett, Wallnussöl oder Kombinationen davon besteht.

11. Tierfuttermittelzusammensetzung gemäß einem der vorhergehenden Ansprüche, zusätzlich umfassend 0,01 bis 3 Gew.-% eines Mineralzusatzes.

12. Tierfuttermittelzusammensetzung gemäß einem der vorhergehenden Ansprüche, zusätzlich umfassend 0,01 bis 2,0 Gew.-% Aminosäuren sowie essentielle Nährstoffe.

13. Tierfuttermittelzusammensetzung gemäß Anspruch 12, wobei die Aminosäuren ausgewählt sind aus der Gruppe bestehend aus Methionin, Cystein, Threonin, Tryptophan oder Kombinationen davon.

14. Tierfuttermittelzusammensetzung gemäß einem der vorhergehenden Ansprüche, wobei diese weiterhin ein Protein umfasst ausgewählt aus der Gruppe bestehend aus einem Weizenprotein, einem Roggenprotein, einem Gerstenprotein, einem Haferprotein, einem Rapsprotein, einem Lupinenprotein, einem Erbsenprotein, einem Reisprotein, einem Sojaprotein, einem Hirseprotein, einem Amaranthprotein, einem Pfeilwurzprotein, einem Chiaprotein, einem Buchweizenprotein, einem Maniokprotein, einem Kichererbsenprotein, einem Erdnussprotein, einem Kartoffelprotein, einem Sonnenblumenprotein, einem Tapiokaprotein oder Kombinationen davon.

15. Tierfuttermittelzusammensetzung gemäß einem der vorhergehenden Ansprüche, wobei Kohlenhydrate ausgewählt sind aus Getreide und/oder Pseudogetreide und/oder Gemüse, insbesondere ausgewählt sind aus der Gruppe bestehend aus Buchweizenkohlenhydrat, Dinkelkohlenhydrat, Amaranthkohlenhydrat, Quinoakohlenhydrat, Weizenkohlenhydrat, Hirsenkohlenhydrat, Süßkartoffelkohlenhydrat, Maniokkohlenhydrat, Roggenkohlenhydrat, Gerstenkohlenhydrat, Haferkohlenhydrat, Maiskohlenhydrat, Reiskohlenhydrat, Kartoffelkohlenhydrat und Kombinationen davon.

16. Verfahren zur Herstellung der Tierfuttermittelzusammensetzung gemäß einem der Ansprüche 1-15, umfassend den Schritt

    a) Mischen von Protein aus der Familie der Wasserlinsengewächse (Lemnaceae) mit Kohlenhydraten, vorzugsweise mit Getreide- und/oder Kartoffelkohlenhydraten, und mit Faserstoffen, vorzugsweise mit Gemüsefaserstoffen, in flüssiger Phase

17. Verfahren gemäß Anspruch 16, zusätzlich umfassend die Schritte b. gegebenenfalls Hinzufügen von Aminosäureoptimiertem Protein aus Ständerpilzspezies (Basidiomycota) oder Schimmelpilzspezies, und/oder war von in-vitro Fleisch;

c. gegebenenfalls Erhöhen der Trockensubstanz der flüssigen Phase;

d. gegebenenfalls Zugeben von Aminosäuren in flüssiger Phase und Erhalt einer flüssigen Zusammensetzung;

e. gegebenenfalls Zugeben von wasserlöslichen Mineralstoffen unter Erhalt einer ergänzten Zusammensetzung;

f. gegebenenfalls Zugeben von Fett und Homogenisieren mit der flüssigen oder ergänzten Zusammensetzung; und

g. gegebenenfalls Trocknen der flüssigen Zusammensetzung oder der ergänzten Zusammensetzung.

18. Verfahren gemäß Anspruch 16, wobei in Schritt a) Protein aus der Familie der Wasserlinsengewächse mit Getreide- und/oder Kartoffelkohlenhydraten, und mit Gemüsefaserstoffen in flüssiger Phase gemischt wird.

19. Verwendung einer Tierfuttermittelzusammensetzung umfassend 5 bis 60 Gew.-% Protein unter Bezugnahme auf das Trockengewicht der Zusammensetzung, umfassend Protein aus der Familie der Wasserlinsengewächse (Lemnaceae), wobei ein korrigierter Aminosäureindex mindestens 0,9 beträgt; 0,5 bis 65 Gew.-% Kohlenhydrate unter Bezugnahme auf das Trockengewicht der Zusammensetzung, und 0,001 bis 5 Gew.-% Faserstoff unter Bezugnahme auf das Trockengewicht der Zusammensetzung, als Alleinfutter für Haustiere.

20. Verwendung gemäß Anspruch 19, wobei die Zusammensetzung als Alleinfuttermittel für Haustiere und Tiere wildlebender Arten, die in zoologischen Einrichtungen gehalten werden, insbesondere bevorzugt als Alleinfuttermittel für Heimtiere und Kleintiere geeignet ist.

**Fig. 1**

## Bewertung Hundebesitzer

Fig. 2

## Aufnahmeverhalten Hund

■ Verweigerung

■ Reduzierte
  Aufnahme
■ Zögerlich

■ Vorsichtig

■ Großer Appetit

■ Heißhunger

**Fig. 3A**

## Eigenschaften Kot

■ Durchfall

■ weicher

■ normal

■ härter

**Fig. 3B**

Europäisches
Patentamt

European
Patent Office

Office européen
des brevets

**EUROPÄISCHER RECHERCHENBERICHT**

Nummer der Anmeldung

EP 21 17 2615

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | BROWN W. Y. ET AL: "Duckweed (Landoltia punctata) in dog diets decreases digestibility but improves stool consistency", ANIMAL PRODUCTION SCIENCE, Bd. 53, Nr. 11, 1. Januar 2013 (2013-01-01), Seite 1188, XP055823333, AU ISSN: 1836-0939, DOI: 10.1071/AN13198 * Zusammenfassung * * Seite 1189, linke Spalte, Absatz 2 - rechte Spalte, Absatz 2 * * Seite 1191, linke Spalte, Absatz 2 - rechte Spalte, Absatz 1 * * Tabellen 1-5 *<br>----- | 1-20 | INV. A23K10/30 A23K10/35 A23K20/142 A23K50/40 |
| X | LOUIS L. RUSOFF ET AL: "Duckweeds (Lemnaceae family): a potential source of protein and amino acids", JOURNAL OF AGRICULTURAL AND FOOD CHEMISTRY, Bd. 28, Nr. 4, 1. Juli 1980 (1980-07-01), Seiten 848-850, XP055537529, US ISSN: 0021-8561, DOI: 10.1021/jf60230a040 * Zusammenfassung * * Tabellen 1, 2 *<br>-----<br>-/-- | 1-20 | RECHERCHIERTE SACHGEBIETE (IPC)<br><br>A23K C11C |

Der vorliegende Recherchenbericht wurde für alle Patentansprüche erstellt

| Recherchenort | Abschlußdatum der Recherche | Prüfer |
|---|---|---|
| München | 5. Oktober 2021 | Stiegler, Petra |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes
Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 21 17 2615

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Lobmaier Tobias: "Wasserlinsen - die Proteinmaschinen", foodaktuell.ch, 5. November 2019 (2019-11-05), Seiten 1-2, XP055823152, Gefunden im Internet: URL:https://www.foodaktuell.ch/2019/11/05/wasserlinsen-die-proteinmaschinen/ [gefunden am 2021-07-12] * das ganze Dokument * | 1-20 | |
| X | CN 108 041 277 A (CHONGQING SHENGSHUN TECH CO LTD) 18. Mai 2018 (2018-05-18) * Absätze [0001] - [0008], [0027], [0041]; Beispiel A * | 1-20 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| München | 5. Oktober 2021 | Stiegler, Petra |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

.......................................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 17 2615

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-10-2021

| Im Recherchenbericht angeführtes Patentdokument | Datum der Veröffentlichung | Mitglied(er) der Patentfamilie | Datum der Veröffentlichung |
|---|---|---|---|
| CN 108041277 A | 18-05-2018 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Lebensmittelanalytik. 2013